# EUROPEAN PATENT APPLICATION

(11) **EP 1 298 645 A1**
(43) Date of publication of application: **02.04.2003**
(21) Application number: 01123079.4
(22) Date of filing: 26.09.2001
(51) Int. Cl.: G10L 17/00

(54) **Method for detecting emotions in speech, involving linguistic correlation information**

(71) Applicant: Sony International (Europe) GmbH, 10785 Berlin (DE)
(72) Inventor: Marasek, Krzysztof, Adv. Tech. Center, 70327 Stuttgart (DE)
(74) Representative: Müller - Hoffmann & Partner

(57) **Abstract**

It is suggested in a method for detecting emotions from speech to involve linguistic correlation information (LCI) to better detect a current emotional state (ES) of a given speaker. Said linguistic correlation information (LCI) is derived from a recognition result (RS) and may contain semantical cue information (SemCI) and/or syntactical cue information (SynCI).

## Description

The present invention relates to a method for detecting emotions from speech, to a system for carrying out the method, and a computer program product to carry out the method. In particular, the present invention relates to a method for detecting emotions from speech input of at least one speaker involving linguistic correlation information and more particular semantic cue information and/or syntactic cue information of said speech input.

In many applications, it is desired to detect the current emotional state of a human speaker, e. g. of a user of an equipment, or the like. Many methods for detecting the emotional state of a human being have been described. Many of these known methods employ and evaluate different sources of features, visual sources, acoustical sources and other physiological sources.

In the case of an acoustical speech input, however, emotion detection is a very difficult problem, because the inter-speaker variance of emotional speech is very high. Therefore, the common procedures of evaluating prosodic features and/or voice quality features from a given speech input might not be sufficient to detect a current emotional state of a speaker in a particular reliable manner.

It is an object of the present invention to provide a method for detecting emotions from acoustical speech input in which the error of such a detection is particular low and the detection itself is more accurate and more refined.

The object is achieved by a method for detecting emotions with the characterizing features of claim 1. The object is also achieved by a system for carrying out the method according to the features of claim 12 as well as by a computer program product according to the features of claim 13. Preferred embodiments of the inventive method for detecting emotions are within the scope of the respective dependent subclaims.

According to the invention, in the method for detecting emotions from speech input of at least one speaker a process of speech recognition is carried out on a given speech input so as to obtain at least an utterance hypothesis and/or a recognition result for said speech input. Further, a process of linguistic correlation analysis is carried out on said utterance hypothesis, on said recognition result and/or on parts thereof so as to obtain linguistic correlation information. Finally, a process of recognizing an emotional state for said speaker is carried out, adapted and/or configured involving said linguistic correlation information.

It is therefore a basic idea of the present invention to use the linguistic correlation on the basis of which human speech is founded and to evaluate that in different emotional contexts a human speaker is inclined to follow different linguistic rules and/or structures. If a linguistic entity or correlation is detected within the received and recognized speech input the occurance of such a linguistic correlation of features indicates with a certain probability a certain emotional state in which the given speech input has been uttered by the human speaker.

According to a preferred embodiment of the inventive method for detecting emotions from speech input, said linguistic correlation information is generated so as to contain semantic cue information and/or syntactic cue information.

Said semantic cue information is generated so as to describe occurences, the distribution, and/or the like of specific semantic cues being contained in the given and received speech input. In a further preferred embodiment reference is taken to a given semantic cue data base containing specific semantic cues, or the like.

It is in particular preferred to use speech segments, specific words, in particular garbage words, or the like, speech phrases, exclamations, spontaneous short phrases, swear words, combinations and/or parts thereof, and/or the like as semantic cues. The benefit of this measure is given by the fact that human speakers use different word classes or classes of exclamations with certain probabilities in different emotional contexts. For example, if a speaker is angry, the occurence of swear words or non-polite words is much more probable than in other situations. The same holds for other contexts or situations.

In the sense of the present invention garbage words are meant to at least include utterances which have no assigned lexically defined notion, for instance "ah", "ooh", "hm" or the like.

On the other hand, the analysis with respect to the context, i. e. the semantic analysis of the recognized speech input is only one alternative to increase the rate of emotion detection.

Alternatively or additionally, human speakers use different ways of constructing their speech in form of sentences, or the like. Another attempt is therefore to evaluate the structure of the speech reflecting or indicating the current emotional state of the speaker.

In accordance to another preferred embodiment of the inventive method syntactic cue information is therefore generated so as to describe occurences, the distribution, and/or the like of specific syntactic cues being contained in said speech input. Preferably, reference is taken to a given syntactic cue data base containing specific syntactic cues, and/or the like.

As syntactic cues the structure, position, sequence and/or other syntactical properties may be used, in particular with respect to sentences, speech segments, specific words, in particular swear words, or the like, speech phrases, exclamations, spontaneous short phrases, combinations and/or parts thereof, and/or the like.

In some cases it might be sufficient to base the detection of an emotional state purely on said linguistic correlation information. However, in other cases using linguistic correlation information may be combined with extralinguistic features in the process of detecting an emotional state of a given user.

In accordance to another advantageous embodiment of the present invention it is therefore suggested to carry out a process of extralinguistic feature analysis on said speech input so as to obtain voice quality features and/or prosodic features as extralinguistic features to be involved in the process of detecting an emotional state for said speaker.

In particular, it is suggested to use pitch, pitch range, intonation attitude, loudness, speaking rate, phone duration, speech element duration features, and/or the like as prosodic features.

On the other hand, it is suggested in accordance to another preferred embodiment of the invention to use phonation type, articulation manner, voice timbre, gender, age features, and/or the like as voice quality features.

Additionally or alternatively, it is suggested to use spectral tilt features, amplitude difference features between first harmonic and first, second, and/or third formant band width features, spectral flatness features, harmonic-to-noise ratio features, and/or the like are used as voice quality features.

As a matter of fact, each speaker has an individual voice performance. Additionally, the structure and the distinct words within the speech of a speaker are chosen individually, too.

It is therefore advantageous to carry out a process of speaker identification on said given speech input or on a part thereof so as to obtain speaker Identification and/or classification data. Additionally, the process of recognizing the emotional state or a change thereof for a given speaker may then be carried out, adapted and/or configured according to said speaker identification and/or classification data. This is done to reduce the error rate of the process of recognizing said emotional state.

It is a further aspect of the present invention to provide a system, an apparatus, a device, and/or the like for detecting emotions from input speech which is, in each case, capable of performing and/or realizing the inventive method for detecting emotions from speech input and/or its steps.

According to a further aspect of the present invention a computer program product is provided comprising computer program means which is adapted to perform and/or to realize the inventive method for detecting emotions from speech input and/or its step when it is executed on a computer, a digital signal processing means, and/or the like.

Further aspects of the present invention become more apparent from the following remarks:

Automatic recognition of emotion in the process of speech recognition is usually based on the changes of the speaker's voice. It is proposed to use semantic and syntactic cues within the recognized utterance to improve the automatic detection of emotional status. The method can be combined with other methods, which use prosodic features, voice quality and others to detect a speaker's emotion.

State-of-the art emotion detection systems use prosodic and voice quality features extracted from a speech signal. The prosodic features may include intonation patterns and changes of the pitch tone during sentence articulation, changes in energy and duration of speech signal. The voice quality features may comprise of detection of phonation changes and articulatory precision.

The features used by current emotion detection systems are hard to obtain and are computationally complex. Complicated signal processing techniques are involved in the features computation. Many of the features are speaker-dependent what makes the emotion detection even more complex. Typically a post-classificator (e. g. NN, k-nearest neighbour) is used to decide on actual emotion. Emotion detection systems are usually independent from a speech recognizer. Usually systems try to monitor the emotional status of the speaker continuously, what seems not to be necessary for many applications and causes additional computational burden.

None of the known systems used not-modified speech recognition system to detect emotions. In our proposal post-processing of the recognition result is performed to judge about speaker's emotions.

The linguistic correlates of emotions are not exploited yet in the practical emotion detection systems. The affect of the speaker is often realized not only by voice changes, but also by producing some non-speech and especially by producing some spontaneous short phrases, like "oh my god", "bloody", "shit", "super", "extra", etc. We can call them semantic cues of the emotion.

It can be expected also, that by high attitude of emotion the way how the sentences are formulated changes (syntactic cues). For example, if someone is angry, he will use a lot of exclamations, non-polite words and word forms, etc. while being happy the sentences will be longer, maybe with more polite or diminished forms of words.

The semantic and syntactic analysis of the recognized utterance can be included in the speech understanding module of the dialogue system which, in order to properly react on the user's query or statement, has to analyze the content of the recognized utterance. In such an analysis well-mannered forms are usually omitted in the search of the important topic. Here, the garbage words and the sentence structure are of the importance - they give clear indication of the emotional status of the speaker.

The proposed method of emotion recognition can be used in combination with other methods, especially based on prosodic and voice quality features. It can be also combined with detection of non-speech events characteristic for the emotions.

The emotion detection system utilizes a speech recognition unit, the added functionality does not require much more computation to be added to the usual speech recognition. Also the memory requirements are negligible compared to the speech recognition system. The relation between detected special phrases and given emotion is quite obvious, thus the emotion detection should work with high confidence.

The proposed method will identify rather the turning points in the emotional status of the speaker, what may make the system adaptation easier to implement.

The proposed method of emotion recognition can be used in combination with other methods, especially based on prosodic and voice quality features.

In the following, further advantageous aspects of the present invention will be described taking reference to the accompanying figure.

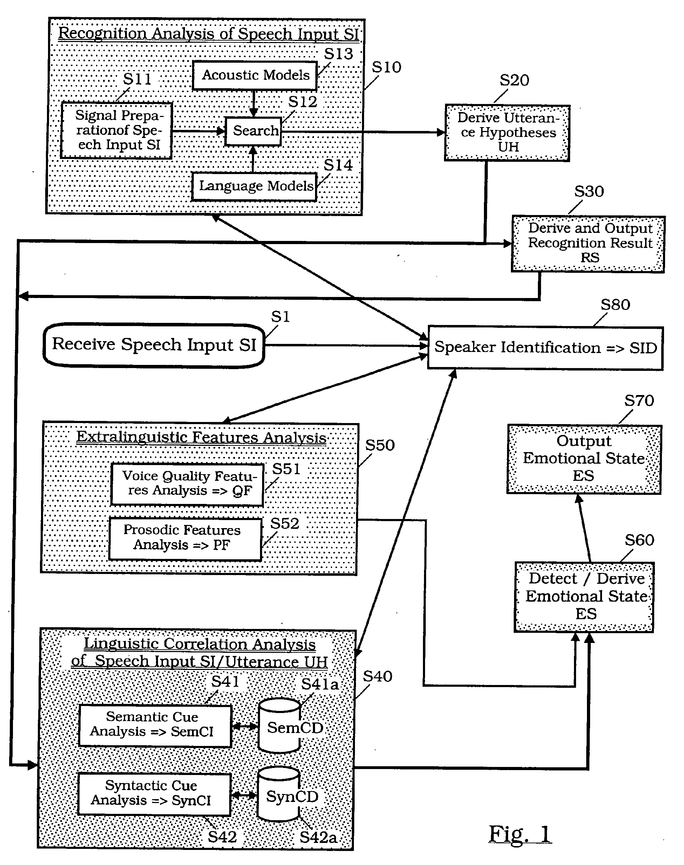

- **Fig. 1**: is a schematical block diagram elucidating a preferred embodiment of the present invention.

Fig. 1 describes a preferred embodiment for the inventive method for detecting emotions from speech input.

In a first step S1 a speech input SI is received. The following main setions S10, S50 and S80 of recognition analysis S10, extralinguistic feature analysis S50 and, optionally, of speaker identification S80 may be carried out in parallel as depicted in Fig. 1, or sequentially.

The first section of recognition analysis S10 performs in a first step S11 the preparation of the signal of the speech input SI. In a next step S12 the speech input is analyzed and it is searched for a recognizing phrase. The searching process S12 is supported by involving and supplying acoustic models S13 as well as language models S14. Then the first section S10 of recognition analysis is left, and in a following section S20 an utterance hypothesis UH being representative for the given speech input SI is generated. Sometimes, it is also necessary to generate and use a set or a multiplicity of possible utterance hypotheses from which due to a distinct evaluation scheme a best utterance hypothesis is selected. As a final section S30 of the recognition sequence from the utterance hypothesis UH or the multiplicity of utterance hypotheses UH a certain hypothesis is selected and output as a recognition result RS.

Starting point for the emotion detection according to the present invention are the utterance hypothesis UH and/or the output recognition result RS of sections S20 and S30, respectively.

In a section S40 of linguistic correlation analysis the utterance hypothesis UH and/or the recognition result RS are used to perform a semantic and/or syntactic analysis of the utterance hypothesis and/or of the recognition result in steps S41 and S42, respectively, so as to generate semantic cue information SemCI and syntactic cue information SynCI, respectively. The semantic and/or syntactic analysis of the steps S41 and S42 may be supported by, eventually external, semantic cue data bases SemCD and syntactical cue data bases SynCD in steps S41a and S42a, respectively.

In the next section S60 the derived information is put together to derive a current emotional state ES for the current speaker. In the following section S70 the detected emotional state ES for the current speaker is output.

The process S60 of emotion detection may further be assisted and supported by an optional section S50 of extralinguistic feature analysis involving a step S51 of deriving voice quality features QF and/or a step S52 of deriving prosodic features PF, which may then be fed into a section S60 for emotion detection.

The section S80 of speaker identification for generating speaker identification data SID may also assist the sections of recognition analysis S10, extralinguistic feature analysis S50, and/or of emotion detection S60. On the other hand, said speaker identification S80 may be refined and updated by feeding information from the former sections S10, S50 and/or S60 into section S80, so as to realize a learning mechanism within the inventive method for detecting an emotional state.

## Claims

1. Method for detecting emotions from speech input of at least one speaker,
- wherein a process of speech recognition (S10) is carried out on a given speech input (SI) so as to obtain (S20, S30) at least an utterance hypothesis (UH) and/or a recognition result (RS) for said speech input (SI),
- wherein a process of linguistic correlation analysis (S40) is carried out on said utterance hypothesis (UH), on said recognition result (RS) and/or on parts thereof so as to obtain linguistic correlation information (LCI), and
- wherein a process of recognizing an emotional state (ES) for said speaker is carried out, adapted and/or configured involving said linguistic correlation information (LCI).

2. Method according to claim 1, wherein said linguistic correlation information (LCI) is generated so as to contain semantic cue information (SemCI), and/or syntactic cue information (SynCI).

3. Method according to claim 2, wherein said semantic cue information (SemCI) is generated so as to describe occurences, the distribution, and/or the like of specific semantic cues being contained in said speech input (SI), in particular taking reference to a given semantic cue data base (SemCD) containing specific semantic cues.

4. Method according to claim 3, wherein speech segments, specific words, in particular garbage words, or the like, speech phrases, exclamations, spontaneous short phrases, swear words, combinations and/or parts thereof, and/or the like are used as semantic cues.

5. Method according to anyone of the claims 2 to 4, wherein said syntactic cue information (SynCI) is generated so as to describe occurences, the distribution, and/or the like of specific syntactic cues being contained in said speech input (SI), in particular taking reference to a given syntactic cue data base (SynCD) containing specific syntactic cues.

6. Method according to claim 5, wherein the structure, position, sequence, and/or other syntactical properties of sentences, speech segments, specific words, speech phrases, exclamations, spontaneous short phrases, swear words, combinations and/or parts thereof, and/or the like are used as syntactic cues.

7. Method according to anyone of the preceding claims, wherein a process of extralinguistic feature analysis (S50) is carried out on said speech input (SI) so as to obtain voice quality features (QF) and/or prosodic features (PF) as extralinguistic features to be involved in the process of detecting an emotional state for said speaker.

8. Method according to claim 7, wherein pitch, pitch range, intonation attitude, loudness, speaking rate, phone duration, speech element duration features, and/or the like are used as prosodic features.

9. Method according to claim 7 or 8, wherein phonation type, articulation manner, voice timbre, gender, age features, and/or the like are used as voice quality features.

10. Method according to anyone of the claims 7 to 9, wherein spectral tilt features, amplitude difference features between first harmonic and first, second, and/or third formant band width features, spectral flatness features, harmonic-to-noise ratio features, and/or the like are used as voice quality features.

11. Method according to anyone of the preceding claims,
- wherein a process of speaker identification is carried out on said given speech input (SI) or a part thereof so as to obtain speaker identification and/or classification data (SID) and
- wherein said process of recognizing an emotional state or a change thereof for said speaker from said speech input (SI) is carried out, adapted and/or configured according to said speaker identification and/or classification data (SID), in particular
- so as to reduce an error rate of the process of recognizing said emotional state.

12. System for detecting emotions from a speech input which is capable of performing and/or realizing a method for detecting emotions according to anyone the claims 1 to 11 and/or the steps thereof.

13. Computer program product, comprising computer program means adapted to perform and/or to realize a method for detecting emotions according to anyone of the claims 1 to 11 and/or the steps thereof when it is executed on a computer, a digital signal processing means and/or the like.
